# FASCICULE DE BREVET EUROPEEN

(11) **EP 0 963 159 B1**
(45) Date de publication et mention de la délivrance du brevet: **07.08.2002**
(21) Numéro de dépôt: 98909563.3
(22) Date de dépôt: 19.02.1998
(51) Int. Cl.: A21C 1/14

(54) **PETRIN POUR LA FABRICATION INDUSTRIELLE DE PATE POUR BOULANGERIE, VIENNOISERIE, PATISSERIE OU PATES SIMILAIRES**
KNETSCHÜSSEL FÜR DIE INDUSTRIELLE HERSTELLUNG VON TEIG ZUM BACKEN VON BROT, WIENER GEBÄCK ODER DERGLEICHEN
KNEADING TROUGH FOR THE INDUSTRIAL PRODUCTION OF DOUGH FOR BAKING BREAD, VIENNESE BAKERY PRODUCTS, PASTRY OR THE LIKE

(30) Priorité: 25.02.1997 FR 9702466
(43) Date de publication de la demande: 15.12.1999
(73) Titulaire: Mecatherm, 67130 Schirmeck (FR)
(72) Inventeur: VOEGTLIN, René, F-67205 Oberhausbergen (FR)
(74) Mandataire: Rhein, Alain
(86) Numéro de dépôt international: FR9800318
(87) Numéro de publication internationale: WO9837766

(56) Documents cités:
- EP-A- 0 457 495
- DE-C- 29 674
- GB-A- 244 194

## Description

L'invention a trait à un pétrin pour la fabrication industrielle de pâtes pour boulangerie, viennoiserie, pâtisserie ou pâtes similaires destiné à alimenter une unité de traitement de cette pâte, telle qu'une diviseuse et comportant, d'une part, une ou plusieurs cuves équipées de moyens de pétrissage et, d'autre part, des moyens de dosage des ingrédients venant alimenter la ou les cuves à chaque cycle de pétrissage.

La présente invention concerne le domaine des équipements pour la boulangerie industrielle.

Il existe, à l'heure actuelle, essentiellement deux types d'unité destinées au pétrissage, à l'échelle industrielle, de pâtes pour boulangerie, viennoiserie, pâtisserie ou similaire. L'un assure une production que l'on qualifiera de discontinue, tandis que l'autre conduit à une production en continu de la pâte. En clair, si, dans le premier cas, l'on dispose de plusieurs pétrins dans lesquels l'on va produire, à chaque cycle de pétrissage, une dose de pâte déterminée, dans le second cas l'unité reçoit, en permanence et d'un côté, les ingrédients, tels que farine, eau, sel et/ou autres et délivre, en continu, la pâte à son extrémité opposée.

En fait, la solution consistant à produire en discontinu de la pâte est la plus courante et fait appel à plusieurs pétrins dont les cuves évoluent en circuit fermé pour passer successivement, sous des moyens d'alimentation en ingrédients prédosés, puis sous des moyens de pétrissage, avant d'être acheminés en direction de l'unité de traitement de la pâte, par exemple, vers une diviseuse de pâte. A cet instant, les cuves doivent être surélevées au-dessus de la trémie d'alimentation équipant habituellement une telle diviseuse. Après vidage, ces cuves reprennent le cycle à son début. De telles installations sont usuellement dénommées des carrousels de fabrication de pâtes, sachant que leur implantation peut se faire, soit en manège, soit en ligne. Dans le premier cas de figure, les cuves évoluent le long d'une trajectoire circulaire, tandis que dans le second cas ces cuves se déplacent devant des unités de remplissage, de pétrissage et de vidage disposées en ligne. L'on a encore imaginé des installations combinant les deux solutions à la fois.

Il ressort de la description qui précède que de telles installations en carrousel représentent un encombrement au sol très important, sans compter que l'on est dans l'obligation, en outre, de lever les cuves pour déverser leur contenu dans la diviseuse de pâte. L'on doit, encore disposer de moyens d'alimentation et de dosage des ingrédients placés en hauteur pour, précisément, alimenter, successivement, ces cuves à chaque cycle de pétrissage.

Aussi, à un encombrement au sol important s'ajoute, de toute manière, un encombrement en hauteur de ce type d'installations.

Finalement, celles-ci sont de conception très complexe en raison, tout particulièrement, des moyens à mettre en oeuvre pour convoyer, en circuit fermé, les différentes cuves. Aussi, les risques de défaillance sont élevés et il est nécessaire de procéder à de nombreuses interventions de maintenance pour éviter les arrêts de production.

Dans le cas d'un pétrin fonctionnant en continu, l'on dispose, habituellement, d'une cuve à axe horizontal à l'intérieur de laquelle interviennent un ou plusieurs outils ayant pour fonction de mélanger les ingrédients, puis d'assurer, progressivement, le pétrissage de la pâte.

L'inconvénient majeur qui découle de ce type de pétrin continu réside au niveau des périodes transitoires qu'il convient de respecter à chaque démarrage et en fin de production. En effet, durant ces phases transitoires et, d'une manière générale, tant que le pétrin n'est pas pleinement en charge, la pâte délivrée n'est pas de qualité constante. Aussi, pendant ces phases transitoires il ne peut y avoir production, d'où découle, bien sûr, une baisse de rentabilité de l'installation. Pour les mêmes raisons une installation équipée d'un pétrin à fonctionnement continu ne permet pas de changer instantanément de recette de pâte fabriquée. Elle est, par conséquent, d'utilisation peu souple.

En outre, se pose le problème du dosage des ingrédients en continu, moins précis que le dosage par charge de cuve.

Par ailleurs, bien que moins encombrant qu'une installation en carrousel de pétrins multiples à cuve, le pétrin en continu occupe toutefois un encombrement très substantiel au sol tout particulièrement si l'on souhaite qu'il soit à même de satisfaire à des cadences de production élevées.

Ainsi, la présente invention se propose de répondre aux inconvénients, tant des installations en carrousel que des pétrins en continu.

A cet effet, elle concerne un pétrin pour la fabrication industrielle de pâtes pour boulangerie, viennoiserie pâtisserie ou pâtes similaires, destiné à alimenter une unité de traitement, telle qu'une diviseuse de pâte comprenant, d'une part, une ou plusieurs cuves équipées de moyens de pétrissage et, d'autre part, des moyens de dosage des ingrédients venant alimenter la ou les cuves à chaque cycle de pétrissage, caractérisé par le fait que la ou les cuves sont montées basculantes sur un bâti support surmontant ladite unité de traitement de pâte, sur ce bâti support étant montés, en outre, au-dessus de la ou des cuves, lesdits moyens de dosage des ingrédients.

Selon une particularité de la présente invention, la ou les cuves sont de type cylindrique à axe horizontal et sont réparties en périphérie du bord supérieur d'une trémie d'alimentation équipant l'unité de traitement de la pâte.

Les avantages résultant de la présente invention consistent en ce que le pétrin ne représente qu'un faible encombrement au sol puisqu'il peut être placé directement au-dessus d'une diviseuse de pâte. A ce propos si l'on tient compte des dimensions usuelles d'une telle diviseuse de pâte, l'on peut imaginer une installation dont l'axe horizontal du pétrin de forme générale cylindrique se situe approximativement à hauteur de passage d'homme, si bien qu'il reste amplement la place pour disposer les moyens de dosage des ingrédients dans la hauteur sous plafond des locaux actuellement utilisés en boulangerie industrielle.

De plus, les cuves de ce pétrin conforme à l'invention, restent à leur même emplacement lors des différentes phases de remplissage des ingrédients, de pétrissage, et de vidage dans la trémie d'alimentation de la diviseuse de pâte, ce qui supprime la complexité de la mécanique des installations en carrousel décrites plus haut.

D'autres buts et avantages de la présente invention apparaîtront au cours de la description qui va suivre se rapportant à un mode de réalisation qui n'est donné qu'à titre d'exemple indicatif et non limitatif.

La compréhension de cette description sera facilitée en se référant aux dessins joints en annexe dans lesquels :
- la figure 1 est une vue schématisée en élévation et en coupe partielle du pétrin conforme à l'invention ;
- la figure 2 est une vue schématisée et en coupe partielle selon II-II de la figure 1.

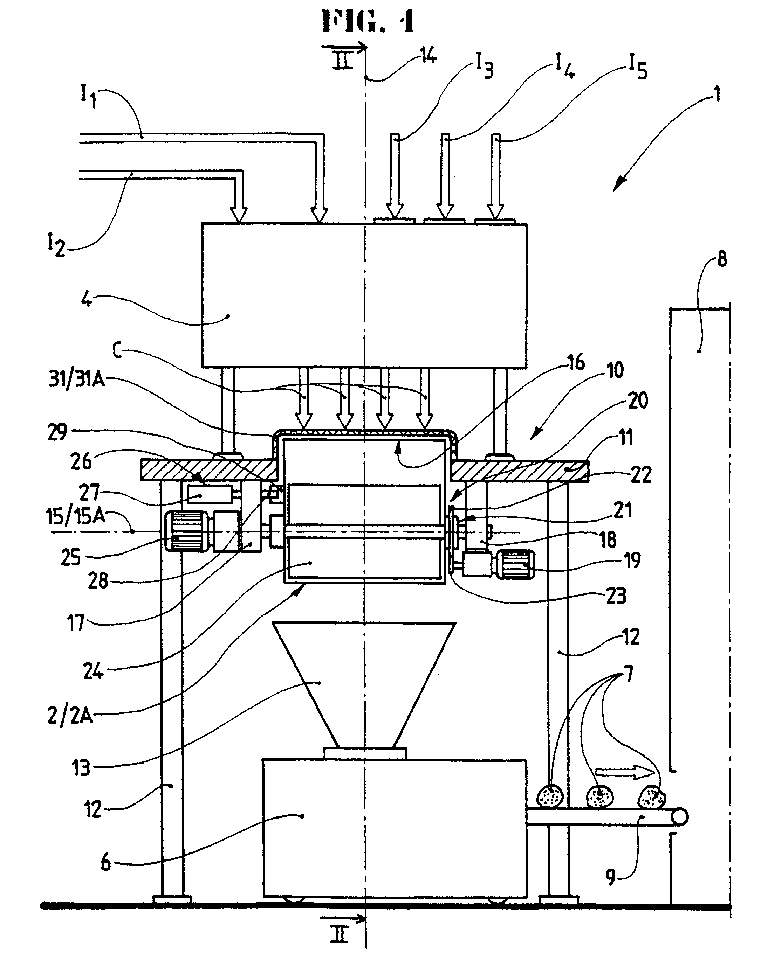

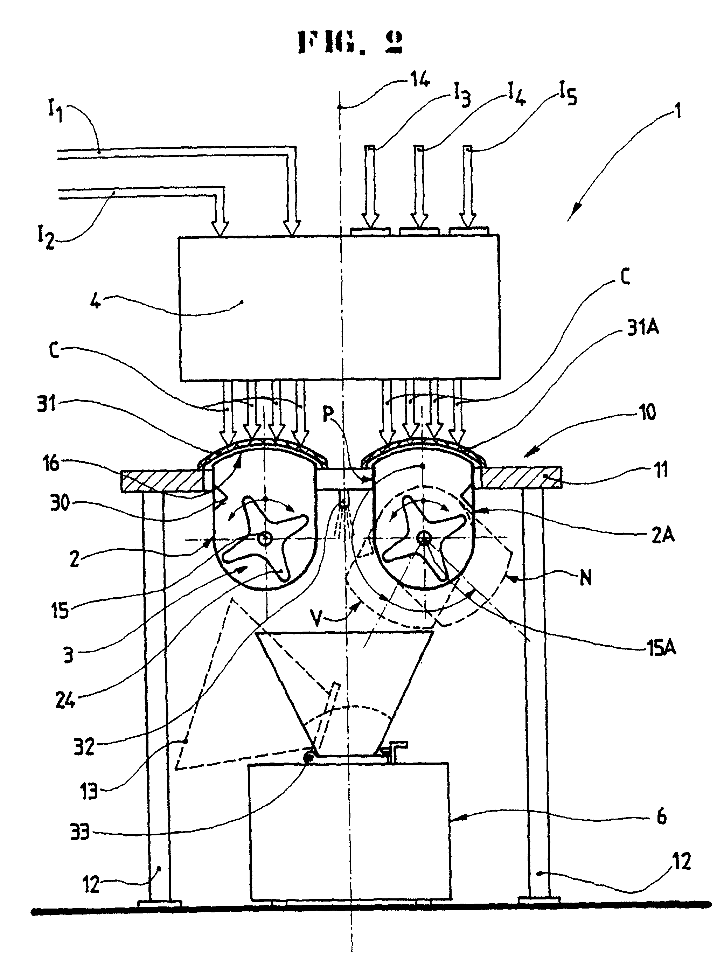

Tel que représenté dans les figures 1 et 2 des dessins ci-joints, la présente invention concerne, plus particulièrement un pétrin 1 destiné à la fabrication industrielle de pâtes pour boulangerie, viennoiserie, pâtisserie ou pâtes similaires.

Un tel pétrin 1 comporte au moins une cuve 2 munie de moyens de pétrissage 3. En fait, dans le mode de réalisation illustré dans les figures et décrit plus loin, ce pétrin 1 comporte deux cuves 2, 2A, mais pourrait, très bien en comporter davantage comme cela ressortira de la description qui va suivre.

I1 est encore pourvu de moyens de dosage 4 des ingrédients I1, I2, I3, I4, I5 destinés à alimenter successivement les cuves 2, 2A à chaque cycle de pétrissage.

Finalement, ce pétrin 1 comporte des moyens pour délivrer la pâte une fois pétrie, depuis une cuve 2, 2A dans une unité de traitement, par exemple sous forme d'une diviseuse de pâte 6 qui, tel que visible dans la figure 1, a pour fonction de diviser la pâte en pâtons réguliers 7. Ces pâtons 7 sont, ensuite, acheminés en direction d'une unité de traitement en aval, notamment une chambre de repos 8, ceci par l'intermédiaire d'un convoyeur approprié 9.

En fait, selon l'invention, les cuves 2, 2A sont montées basculantes sur un bâti support 10 surmontant ladite diviseuse de pâte 6, sur ce bâti support 10 étant montés, en outre, au-dessus de ces cuves 2, 2A, les moyens 4 de dosage des ingrédients.

Ainsi, selon un mode de réalisation préférentiel, ce bâti support 10 se distingue par une plateforme 11, supportant la charge des cuves 2, 2A, et soutenue par des poteaux 12, préférentiellement au nombre de quatre, répartis en périphérie de la diviseuse 6. A noter, à ce propos, que cette diviseuse de pâte 6 est, avantageusement, surmontée d'une trémie d'alimentation 13 disposée sous ladite plateforme 11 préférentiellement dans l'axe médian vertical 14 du pétrin 1.

Quant aux cuves 2, 2A proprement dites, tel que précisé plus haut, leur nombre peut être variable et dépendra, en définitive, de la cadence de production recherchée. En fait, lorsque l'on dispose de plusieurs cuves, celles-ci sont réparties, régulièrement, au-dessus et autour de cette trémie d'alimentation 13 de la diviseuse de pâte 6.

Selon un mode de réalisation préférentiel, une telle cuve 2, 2A est de forme cylindrique à axe horizontal 15, 15A et comporte des parois d'extrémités planes. Elle comporte, en outre, dans sa partie supérieure 16, un col d'ouverture lui permettant de recevoir les différents ingrédients mais aussi de déverser la pâte une fois pétrie, dans la trémie d'alimentation 13. Ce col d'ouverture est orienté vers le haut en position de pétrissage P de la cuve 2, 2A comme représenté en traits pleins sur la figure 2, sachant que cette cuve 2, 2A peut encore être amenée, par basculement autour de son axe horizontal 15, 15A, dans une position de vidage V et, le cas échéant, dans une position de nettoyage N. Les deux dernières positions ont été représentées en traits discontinus sur cette même figure 2.

Ainsi, une telle cuve 2, 2A est soutenue, de part et d'autre par des paliers 17, 18 solidaires de la plateforme 11, tandis que des moyens moteurs 19, du type électrique, sont en mesure de commander le basculement de cette cuve 2, 2A par l'intermédiaire de moyens d'entraînement 20 appropriés. Tout particulièrement, sur l'une des extrémités 21 de l'axe de basculement 15, 15A de la cuve 2, 2A peut être montée une couronne 22 sur laquelle vient s'engréner une roue dentée 23 précisément commandée en rotation par lesdits moyens moteurs 19. L'on comprendra bien évidemment que l'on peut envisager d'autres modes de réalisation en ce qui concerne ces moyens d'entraînement 20, tel qu'un système à poulie et à courroie.

En ce qui concerne les moyens de pétrissage 3 équipant une cuve 2, 2A, ceux-ci se présentent, avantageusement, sous forme d'un rotor à pales 24 à axe de rotation horizontal. En fait, l'axe 15, 15A de la cuve 2, 2A donc l'axe de basculement de cette dernière et l'axe de rotation du rotor à pales 24 sont préférentiellement confondus. Quant à l'entraînement de ce rotor à pales 24 il est obtenu par l'intermédiaire, là encore, d'un moteur électrique approprié 25 notamment à vitesse variable et à sens de rotation réversible. Cela permet d'ajuster ces paramètres aux différents stades du traitement de la pâte consistant en une opération de frasage préalable à l'opération de pétrissage proprement dite. Celle-ci est, en effet, menée à une vitesse de rotation du rotor à pales 24 plus soutenue et dans un sens de rotation inverse à celui emprunté pendant le frasage.

Plus particulièrement, pendant le pétrissage de la pâte, il est impératif de maintenir la cuve 2, 2A immobile par rapport à son axe de basculement 15, 15A ceci dans sa position P. Aussi, l'on dispose de moyens appropriés 26 de blocage en rotation de cette cuve 2, 2A, par exemple sous forme d'un ou plusieurs vérins 27 montés fixes sur le bâti support 10, notamment sur l'un et/ou l'autre des paliers 17, 18, et dont la tige de commande 28 vient coopérer, en position de blocage, avec un manchon de retenue 29 solidaire de ladite cuve 2, 2A.

Celle-ci peut recevoir d'autres équipements destinés à améliorer le pétrissage de la pâte. Tout particulièrement au niveau de sa paroi interne, elle peut être équipée d'un ou plusieurs inserts 30 contre lesquels ce rotor à pales 24 aura tendance à battre la pâte pendant l'opération de pétrissage. De plus, pour certaines pâtes il est impératif que ce pétrissage soit mené dans des conditions de température contrôlée. Aussi, une cuve 2, 2A peut être à température régulée. Tout particulièrement l'on peut imaginer de concevoir cette cuve à double paroi autorisant la circulation d'un fluide à température régulée, notamment de refroidissement.

Finalement, tel que visible dans les figures 1 et 2, la plateforme 11 est équipée, avantageusement, de couvercles fixes 31, 31A venant refermer le col d'ouverture des cuves 2, 2A lorsque celles-ci sont relevées, c'est-à-dire dans leur position de pétrissage P.

Au niveau de ces couvercles 31, 31A sont réalisés des piquages au travers desquels s'effectue l'alimentation des cuves 2, 2A en ingrédients I1, I2, I3, I4, 15 provenant des moyens de dosage 4. Ceux-ci correspondent, préférentiellement, à des appareillages disponibles dans le commerce, leur configuration étant, par ailleurs, dépendante du type d'ingrédients à doser.

A titre d'exemple, le dosage de la farine est réalisé par pesage. Plus particulièrement sur le bâti support 10 peut être monté par l'intermédiaire de pesons, un cadre de pesage supportant une trémie à même de contenir la farine nécessaire à un cycle de pétrissage. Ainsi, en début de cycle on vient alimenter cette trémie en farine à l'aide d'une pompe appropriée, ceci jusqu'à détecter, au travers des pesons, que l'on a atteint dans la trémie la quantité de farine souhaitée. Sur ce même cadre de pesage peut être monté le réservoir destiné à contenir l'eau à adjoindre à la pâte. Aussi et à supposer que l'on procède successivement aux opérations de remplissage de farine et d'eau, l'on peut doser, avec précision, chacun de ces ingrédients.

En fonction des recettes mises en oeuvre, cette eau peut être conditionnée en température.

Pour certains ingrédients utilisés dans des proportions moins importantes, tel que les améliorants, le sel, la levure et autres, les moyens de dosage 4 peuvent se présenter sous forme de plusieurs réserves d'ingrédients montés sur le bâti support 10 dont on vient prélever, à chaque cycle de pétrissage, une dose à l'aide de moyens qui sont, là encore connus, par l'Homme du Métier. De tels ingrédients secondaires peuvent être ainsi gérés que leur adjonction à la pâte ne se fasse qu'en cours de pétrissage et à des moments bien déterminés, ceci en fonction de la recette mise en oeuvre.

Préférentiellement, les ingrédients sont acheminés par gravité depuis les moyens doseurs 4 dans les cuves 2, 2A. De plus, au niveau des raccordements des moyens doseurs 4 au couvercle fixe 31, 31A de chacune des cuves 2, 2A l'on fera une distinction au moins entre les produits secs et les produits tels que l'eau, matière grasse et autres, de manière à éviter le colmatage progressif des différentes conduites C de raccordement.

Pour en revenir, à présent, sur le cycle de fonctionnement du pétrin 1, il convient d'observer que celui-ci est indirectement commandé par la cadence de production de l'unité de traitement, dans ce cas, la diviseuse de pâte 6. A ce propos, le pétrin 1 peut être équipé d'un capteur 32, par exemple de type optique à même de détecter le niveau de pâte à l'intérieur de la trémie d'alimentation 13 de cette diviseuse 6.

Plus précisément, cette trémie 13 est systématiquement alimentée par une cuve 2, 2A arrivée en fin de cycle de pétrissage dès l'instant que le niveau de pâte est inférieur à une valeur seuil détectée par le capteur 32. A ce propos, les cycles de pétrissage sont eux-mêmes menés à un rythme tel que l'on puisse satisfaire à la cadence de la diviseuse 6 et, donc, qu'à la demande de cette dernière l'on puisse disposer d'une quantité donnée de pâte pétrie.

Par ailleurs, les moyens de gestion du fonctionnement du pétrin 1 ont pour fonction de faire en sorte qu'à tout moment les moyens doseurs 4 soient à même d'alimenter en une dose d'ingrédients l'une des cuves 2, 2A.

Tel que déjà précisé plus haut, le nombre de cuves 2, 2A équipant le pétrin 1 est dépendant de la cadence de production à satisfaire. Ces cuves 2, 2A sont réparties au-dessus de la trémie d'alimentation 13 de la diviseuse 6, laquelle trémie adopte, préférentiellement, une forme polygonale, de manière à présenter, par rapport à chacune des cuves 2, 2A, un côté parallèle à l'axe 15, 15A de ces dernières. I1 en résulte un meilleur remplissage sans débordement de cette trémie d'alimentation 13.

De manière à faciliter les interventions d'un opérateur, notamment lors des nettoyages, cette trémie d'alimentation 13 peut encore être montée basculante sur la diviseuse 6 à l'aid de moyens d'articulation 33 tels que représentés sur la figure 2.

De même les cuves 2, 2A sont susceptibles d'être amenées, elles aussi, dans une position de nettoyage N dans laquelle, comme visible dans la figure 2, leur col d'ouverture est orienté vers le bas et vers l'extérieur du bâti support 10. Une telle disposition facilite, en effet, l'accès au rotor à pales 24.

Bien entendu, un tel pétrin 1 peut encore être équipé d'autres accessoires par ailleurs connus dans le domaine. Tout particulièrement il peut être pourvu de moyens de graissage des parois de la trémie d'alimentation 13 de la diviseuse de pâte 6 en vue de faciliter l'écoulement de la pâte.

Les avantages découlant de la présente invention consistent, tel que cela apparaît au regard de la description qui précède, en ce que le pétrin 1 destiné à la fabrication industrielle de pâtes est disposé en hauteur, qui plus est, directement au-dessus de l'unité de traitement de pâte, de sorte que son encombrement au sol est réduit au strict minimum. En conséquence, de ce point de vue la présente invention apporte une réelle solution au problème que posent les pétrins à fonctionnement discontinu actuels. Parallèlement, l'on ne retrouve pas au niveau du pétrin 1, tel qu'il vient d'être décrit, les inconvénients d'un pétrin à fonctionnement en continu qui ne permet aucune souplesse de fabrication. En effet, l'on peut, dans le cadre de ce pétrin 1, modifier, instantanément, la recette pour passer de la production d'un produit donné à un autre.

En conséquence, la présente invention représente un net progrès dans le domaine considéré.

## Revendications

1. Pétrin (1) pour la fabrication industrielle de pâtes pour boulangerie, viennoiserie, pâtisserie ou pâtes similaires, destiné à alimenter une unité de traitement, telle qu'une diviseuse de pâte (6), comprenant, d'une part, une ou plusieurs cuves (2, 2A) équipées de moyens de pétrissage (3) et, d'autre part, des moyens (4) de dosage des ingrédients venant alimenter la ou les cuves (2, 2A) à chaque cycle de pétrissage, **caractérisé par le fait que** la ou les cuves (2, 2A) sont montées basculantes sur un bâti support (10) surmontant ladite unité de traitement de pâte (6), sur ce bâti support (10) étant monté, en outre, au-dessus de la ou des cuves (2, 2A) lesdits moyens (4) de dosage des ingrédients.

2. Pétrin (1) selon la revendication 1, **caractérisé par le fait que** le bâti support (6) comporte une plateforme (11) supportant la charge des cuves (2, 2A) et soutenue par des poteaux (12), plus particulièrement au nombre de quatre, répartis en périphérie de l'unité de traitement de pâte (6).

3. Pétrin (1) selon la revendication 2, **caractérisé par le fait que** l'unité de traitement de pâte (6) est surmontée d'une trémie d'alimentation (13) disposée sous la plateforme (11), dans l'axe médian vertical (14) dudit pétrin (1).

4. Pétrin (1) selon l'une quelconque des revendications précédentes, **caractérisé par le fait qu'**une cuve (2, 2A) est de forme cylindrique à axe horizontal (15, 15A) comportant des parois d'extrémité plane, tandis que dans sa partie supérieure (16) elle comporte un col d'ouverture au travers duquel elle est à même de recevoir les différents ingrédients ou encore de déverser la pâte, une fois pétrie, dans la trémie d'alimentation (13) de l'unité de traitement de pâte (6).

5. Pétrin (1) selon la revendication 4, **caractérisé par le fait que** la ou les cuves (2, 2A) sont réparties, régulièrement, au-dessus et autour de la trémie d'alimentation (13) correspondant à l'unité de traitement de pâte (6) et présentant, plus particulièrement, une forme polygonale de manière à présenter par rapport à chacune de ces cuves (2, 2A) un côté parallèle à l'axe (15, 15A) de ces dernières.

6. Pétrin (1) selon l'une quelconque des revendications 4 et 5, **caractérisé par le fait qu'**une cuve (2, 2A) est apte à être amenée, par basculement autour de son axe horizontal (15, 15A), d'une part, dans une position de vidage (V) lui permettant de déverser son contenu dans la trémie d'alimentation (13) de l'unité de traitement de pâte (6) et, d'autre part, dans une position de nettoyage (N) dans laquelle ledit col d'ouverture est orienté vers le bas et vers l'extérieur du bâti support (10) autorisant, notamment, l'accès aux moyens de pétrissage (3).

7. Pétrin (1) selon l'une quelconque des revendications 4 à 6, **caractérisé par le fait qu'**il comporte des moyens moteurs (19), de type électrique, à même de commander, par l'intermédiaire des moyens d'entraînement (20) appropriés, le basculement d'une cuve (2, 2A) dans l'une quelconque de ses positions de pétrissage (P), de vidage (V) ou de nettoyage (N).

8. Pétrin (1) selon l'une quelconque des revendications précédentes, **caractérisé par le fait que** les moyens de pétrissage (3) se présentent sous forme d'un rotor à pales (24) à axe de rotation horizontal, plus particulièrement confondu avec l'axe (15, 15A) de la cuve (2, 2A), ce rotor à pales (24) étant entraîné par l'intermédiaire d'un moteur électrique approprié (25), plus particulièrement à vitesse variable et à sens de rotation réversible, permettant d'ajuster ces paramètres aux différents stades de traitement de la pâte.

9. Pétrin (1) selon l'une quelconque des revendications 4 à 8, **caractérisé par le fait qu'**il comporte des moyens (26) de blocage en rotation d'une cuve (2, 2A) par rapport à son axe de basculement (15, 15A), ceci plus particulièrement dans sa position de pétrissage (P).

10. Pétrin (1) selon la revendication 9, **caractérisé par le fait que** les moyens (26) de blocage en rotation de la cuve (2, 2A) se présentent sous forme d'un ou plusieurs vérins (27) montés fixes sur le bâti support (10), plus particulièrement sur l'un et/ou l'autre des paliers (17, 18) solidaires de la plateforme (11) et soutenant une cuve (2, 2A), ce ou ces vérins (27) comportant une tige de commande (28) à même de coopérer, en position de blocage, avec un manchon de retenue (29) solidaire de ladite cuve (2, 2A).

11. Pétrin (1) selon les revendications 2 et 4, **caractérisé par le fait que** la plateforme (11) est équipée de couvercles fixes (31, 31A) venant refermer le col d'ouverture des cuves (2, 2A) lorsque celles-ci sont en position de pétrissage (P), au niveau de ces couvercles (31, 31A) étant réalisés les piquages au travers desquels s'effectue l'alimentation par gravité des cuves (2, 2A) en ingrédients provenant des moyens de dosage (4).

12. Pétrin (1) selon la revendication 11, **caractérisé par le fait que** les moyens de dosage (4) sont raccordés au couvercle fixe (31, 31A) de chacune des cuves (2, 2A) au moyen de conduites de raccordement (C) distinctes au moins pour les produits secs, d'une part, et les produits, tels que l'eau, matière grasse et autres, d'autre part.

13. Pétrin (1) selon l'une quelconque des revendications précédentes, **caractérisé par le fait que** sur le bâti support (10) est monté, par l'intermédiaire de pesons, un cadre de pesage supportant, d'une part, une trémie à même de contenir la farine nécessaire à un cycle de pétrissage et, d'autre part, un réservoir destiné à contenir l'eau à adjoindre à la pâte, autorisant un dosage avec précision de chacun de ces ingrédients.

## Claims

1. Kneading trough (1) for the industrial production of dough for baking bread, Viennese bakery products, pastry or the like, intended for supplying a processing unit, such as a dough divider (6), comprising, on the one hand, one or several vats (2, 2A) provided with kneading means (3) and, on the other hand, means (4) for measuring out the ingredients to supply the vat or vats (2, 2A) at each kneading cycle, **characterised in that** the vat or vats (2, 2A) are mounted tilting on a supporting frame (10) located above said dough-processing unit (6), on this supporting frame (10) being mounted, in addition, above the vat or vats (2, 2A), said means (4) for measuring out the ingredients.

2. Kneading trough (1) according to claim 1, **characterised in that** the supporting frame (10) includes a platform (11) supporting the load of the vats (2, 2A) and sustained by poles (12), in particular four in number, distributed at the periphery of the dough-processing unit (6).

3. Kneading trough (1) according to claim 2, **characterised in that** above the dough-processing unit (6) is mounted a supply funnel (13) arranged under the platform (11), along the vertical median axis (14) of said kneading trough (1).

4. Kneading trough (1) according to any of the preceding claims, **characterised in that** a vat (2, 2A) has a cylindrical shape with a horizontal axis (15, 15A) including flat end walls, whereas it includes, in its upper portion (16), an opening neck through which it is capable of receiving the various ingredients, or also of pouring the dough, after it has been kneaded, into the supply funnel (13) of the dough-processing unit (6).

5. Kneading trough (1) according to claim 4, **characterised in that** the vat or vats (2, 2A) are evenly distributed above and around the supply funnel (13) corresponding to the dough-processing unit (6) and having, in particular, a polygonal shape, so as to have, with respect to each of these vats (2, 2A), a side parallel to the axis (15, 15A) of the latter.

6. Kneading trough (1) according to any of claims 4 and 5, **characterised in that** a vat (2, 2A) is capable of being brought, through tilting about its horizontal axis (15, 15A), on the one hand, into an emptying position (V) allowing it to pour its content into the supply funnel (13) of the dough-processing unit (6) and, on the other hand, into a cleaning position (N) in which said opening neck is oriented downwards and outwardly with respect to the supporting frame (10), viz. authorizing the access to the kneading means (3).

7. Kneading trough (1) according to any of claims 4 to 6, **characterised in that** it includes electric driving means (19) capable of controlling, through proper driving means (20), the tilting of a vat (2, 2A) into any of its kneading (P), emptying (V) or cleaning (N) positions.

8. Kneading trough (1) according to any of the preceding claims, **characterised in that** the kneading means (3) are in the form of a rotor with blades (24) with a horizontal axis of rotation, in particular coinciding with the axis (15, 15A) of the vat (2, 2A), this rotor with blades (24) being driven through an adequate electric engine (25), in particular a variable-speed motor with reversible direction of rotation, allowing adjusting these parameters to the various stages of processing of the dough.

9. Kneading trough (1) according to any of claims 4 to 8, **characterized in that** it includes means (26) for locking a vat (2, 2A) in rotation with respect to its tilting axis (15, 15A), this in particular in its kneading position (P).

10. Kneading trough (1) according to claim 9, **characterised in that** the means (26) for locking the vat (2, 2A) in rotation are in the form of one or several jacks (27) fixed to the supporting frame (10), in particular to one and/or the other bearing block (17, 18) integral with the platform (11) and supporting a vat (2, 2A), this or these jacks (27) including a control rod (28) capable of co-operating, in locking position, with a retaining sleeve (29) integral with said vat (2, 2A).

11. Kneading trough (1) according to claims 2 and 4, **characterised in that** the platform (11) is provided with fixed covers (31, 31A) closing the opening neck of the vats (2, 2A) when the latter are in the kneading position (P), at the level of these covers (31, 31A) being provided for the holes through which occurs the supplying, by gravity, of the vats (2, 2A) with the ingredients proceeding from the measuring-out means (4).

12. Kneading trough (1) according to claim 11, **characterised in that** the measuring-out means (4) are connected to the fixed cover (31, 31A) of each vat (2, 2A) by means of different connecting conduits (C) at least for the dry products, on the one hand, and products such as water, fat and the like, on the other hand.

13. Kneading trough (1) according to any of the preceding claims, **characterised in that** on the supporting frame (10) is mounted, through balances, a weighing cradle supporting, on the one hand, a funnel capable of containing the necessary flour for one kneading cycle and, on the other hand, a tank aimed at containing water to be added to the dough, allowing an accurate measuring out of each of these ingredients.

## Patentansprüche

1. Knetschüßel (1) für die industrielle Herstellung von Teig zum Backen von Brot, Wiener Gebäck, Konditorbackwaren oder dergleichen, zum Speisen einer Verarbeitungseinheit, wie eines Teigteilers (6), umfassend, einerseits, eine oder mehrere mit Knetmitteln (3) versehene Wannen (2, 2A) und, andererseits, Mittel (4) zum Dosieren der bei jedem Knetzyklus der oder die Wannen (2, 2A) zuzuführenden Ingredienzen, **dadurch gekennzeichnet, daß** die Wanne oder Wannen (2, 2A) schwenkbar auf einem oberhalb der genannten Teigverarbeitungseinheit (6) befindlichen Tragrahmen (10) gelagert sind, wobei an diesem Tragrahmen (10), oberhalb der Wanne oder Wannen (2, 2A), außerdem die genannten Mittel (4) zum Dosieren der Ingredienzen gelagert sind.

2. Knetschüssel (1) nach Anspruch 1, **dadurch gekennzeichnet, daß** der Tragrahmen (10) eine Platform (11) umfaßt, die die Last der Wannen (2, 2A) trägt und von Pfosten (12), insbesondere vier an der Zahl, die am Umkreis der Teigverarbeitungseinheit (6) verteilt sind, unterstützt wird.

3. Knetschüssel (1) nach Anspruch 2, **dadurch gekennzeichnet, daß** oberhlab der Teigverarbeitungseinheit (6) ein Zuführtrichter (13) gelagert ist, der an der senkrechten Mittelachse (14) des genannten Knetschüssels (1) entlang unterhalb der Platform (11) angeordnet ist.

4. Knetschüssel (1) nach irgendeinem der vorgehenden Ansprüche, **dadurch gekennzeichnet, daß** eine Wanne (2, 2A) eine kreiszylindrische Gestalt waagerechter Achse (15, 15A) hat und Endwände aufweist, während sie in ihrem oberen Teil (16) einen Öffnungshals aufweist, durch den hindurch sie in der Lage ist, die verschiedene Ingredienzen aufzunehmen, oder auch den Teig, nachdem dieser geknetet wurde, in den Zufuhrtrichter (13) der Teigverarbeitungseinheit (6) zu gießen.

5. Knetschüssel (1) nach Anspruch 4, **dadurch gekennzeichnet, daß** die Wanne oder Wannen (2, 2A) gleichmäß oberhalb des und um den, der Teigverarbeitungseinheit (6) entsprechenden Zuführtrichter (13) herum verteilt sind, der insbesondere eine polygonale Gestalt hat, derart, daß er bezüglich jeder dieser Wannen (2, 2A) eine zur Achse (15, 15A) dieser letzten parallele Seite aufweist.

6. Knetschüssel (1) nach irgendeinem der Ansprüche 4 und 5, **dadurch gekennzeichnet, daß** eine Wanne (2, 2A) in der Lage ist, durch Kippen um ihre waagerechte Achse (15, 15A) zum einen in eine Entleerungsposition (V), die es ihr erlaubt, ihren Inhalt in den Zufuhrtrichter (13) der Teigverarbeitungseinheit (6) zu gießen, und zum anderen in eine Reinigungsposition (N), in der der genannte Öffnungshals bezüglich des Tragrahmens (10) nach unten und nach außen gerichtet ist, wodurch nämlich Zugang zu den Knetmitteln (3) verschafft wird, gebracht zu werden.

7. Knetschüssel (1) nach irgendeinem der Ansprüche 4 bis 6, **dadurch gekennzeichnet, daß** er Treibmittel elektrischer Art (19) umfaßt, geeignet, über geeignete Antriebsmittel (20) das Kippen einer Wanne (2, 2A) in irgendeine ihrer Knet- (P), Entleerungs- (V) oder Reinigungspositionen (N) zu steuern.

8. Knetschüssel (1) nach irgendeinem der vorgehenden Ansprüche, **dadurch gekennzeichnet, daß** die Knetmittel (3) als ein Rotor mit Schaufeln (24) waagerechter, insbesondere mit der Achse (15, 15A) der Wanne (2, 2A) übereinstimmender Drehachse ausgestaltet sind, wobei dieser Rotor mit Schaufeln (24) über einen geeigneten Elektromotor (25), insbesondere einen Motor änderlicher Geschwindigkeit mit umkehrbarer Drehrichtung, angetrieben wird, der es erlaubt, diese Parameter den verschiedenen Phasen der Teigverarbeitung anzupassen.

9. Knetschüssel (1) nach irgendeinem der Ansprüche 4 bis 8, **dadurch gekennzeichnet, daß** er Mittel (26) zum Sperren der Drehung einer Wanne (2, 2A) bezüglich der Schwenkachse (15, 15A) derselben, und zwar insbesondere in ihrer Knetposition (P), umfaßt.

10. Knetschüssel (1) nach Anspruch 9, **dadurch gekennzeichnet, daß** die Mittel (26) zum Sperren der Drehung der Wanne (2, 2A) als eine odere mehrere fest am Tragrahmen (10), insbesondere an dem einen und/oder an dem anderen, fest mit der Platform (11) verbundenen und eine Wanne (2, 2A) unterstütztenden Lager (17, 18) gelagerte Winden (27) ausgestaltet sind, wobei diese Winde oder Winden (27) eine Steuerstange (28) umfassen, geeignet, in der Sperrposition mit einer fest mit der genannten Wanne (2, 2A) verbundenen Sperrmuffe (29) zusammenzuwirken.

11. Knetschüssel (1) nach Ansprüchen 2 und 4, **dadurch gekennzeichnet, daß** die Platform (11) mit festen Deckeln (31, 31A) versehen ist, die den Öffnungshals der Wannen (2, 2A) schließen, wenn sich diese letzten in der Knetposition (P) befinden, wobei im Bereich dieser Deckel (31, 31A) Löcher vorgesehen sind, durch die hindurch die Speisung unter Schwerkraft der Wannen (2, 2A) mit den von den Dosiermitteln (4) kommenden Ingredienzen erfolgt.

12. Knetschüssel (1) nach Anspruch 11, **dadurch gekennzeichnet, daß** die Dosiermittel (4) mittels verschiedener Verbindungsleitungen (C) wenigstens für die trocknen Produkte, einerseits, und für Produkte wie Wasser, Fett und dergleichen, andererseits, mit dem festen Deckel (31, 31A) jeder Wanne (2, 2A) verbunden sind.

13. Knetschüssel (1) nach irgendeinem der vorgehenden Ansprüche, **dadurch gekennzeichnet, daß** am Tragrahmen (10) über Schnellwaagen ein Einwägerahmen gelagert ist, der, einerseits, einen Trichter, geeignet, das für einen Knetzyklus notwendige Mehl zu enthalten, und, andererseits, einen Behälter, der dazu bestimmt ist, das dem Teig zuzufügende Wasser zu enthalten, trägt, wodurch eine genaue Dosierung jedes dieser Ingredienzen ermöglicht wird.
